Europäisches Patentamt

European Patent Office

Office européen des brevets

(19)

(11) Veröffentlichungsnummer : **0 431 649 B1**

# EUROPÄISCHE PATENTSCHRIFT

(12)

(45) Veröffentlichungstag der Patentschrift :
**14.10.92 Patentblatt 92/42**

(51) Int. Cl.$^5$ : **F01N 7/14, F16L 59/14**

(21) Anmeldenummer : **90123601.8**

(22) Anmeldetag : **07.12.90**

(54) **Verfahren zur Herstellung eines Doppelrohres, insbesondere für katalysatorbestückte Abgasanlagen von Brennkraftmaschinen.**

(30) Priorität : **07.12.89 DE 3940422**
**01.06.90 DE 4017723**

(43) Veröffentlichungstag der Anmeldung :
**12.06.91 Patentblatt 91/24**

(45) Bekanntmachung des Hinweises auf die
Patenterteilung :
**14.10.92 Patentblatt 92/42**

(84) Benannte Vertragsstaaten :
**AT DE ES FR GB IT SE**

(56) Entgegenhaltungen :
**EP-A- 0 047 525**
**EP-A- 0 145 831**
**DE-C- 3 327 353**
**DE-C- 3 609 155**

(73) Patentinhaber : **V.W. WERKE VINCENZ
WIEDERHOLT GMBH & CO KG
W-4755 Holzwickede (DE)**

(72) Erfinder : **Stricker, Willi
K.-Schumacher-Strasse 44
W-5758 Fröndenberg (DE)**

(74) Vertreter : **Ostriga, Harald et al
Stresemannstrasse 6-8 Postfach 20 13 27
W-5600 Wuppertal 2 (DE)**

EP 0 431 649 B1

## Beschreibung

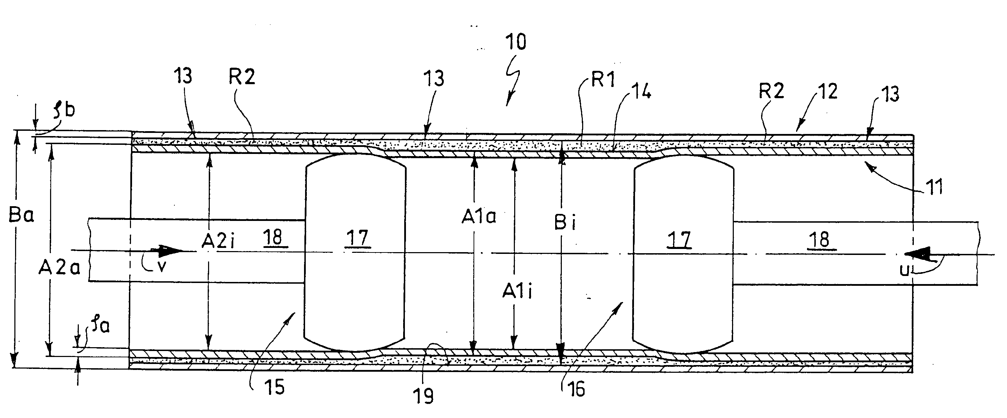

Die Erfindung betrifft zunächst ein Verfahren zur Herstellung eines Doppelrohres entsprechend dem Oberbegriff des Patentanspruchs 1. Dieses Verfahren ist durch die DE-G-33 27 353 (s. dort Fig. 1) bekanntgeworden.

Doppelrohre mit einem in einem Ringraum zwischen einem starren metallischen Innenrohr und einem metallischen Außenrohr angeordneten, verdichteten Isolationsmantel aus temperaturbeständigem Werkstoff werden vornehmlich für katalysatorbestückte Abgasanlagen von Brennkraftmaschinen verwandt. Der Isolationsmantel dient der Schalldämmung und erhöht zudem die Betriebstemperatur des Katalysators bei Kaltstart- und Schwachlastbetrieb der Brennkraftmaschine.

Bei dem aus der DE-G-33 27 353 (s. dort Fig. 1 in Verbindung mit Sp. 4 Z. 11-49) ersichtlichen Verfahren ist ein flexibles Außenrohr, z.B. ein metallener Wellschlauch, mit einem hohlzylindrischen Isolierstoff-Innenmantel ausgekleidet, welcher ein axial zugfestes Geflecht aus Mineralfasern, Tonerdesilikatfasern od.dgl., aufweisen kann.

Um das abgasführende Innenrohr verschiebungs- und klappersicher innerhalb des Isolationsmantels zu halten, unternimmt das bekannte Verfahren folgendes: Das starre Innenrohr, welches in der Regel einen gekrümmten Axialverlauf aufweist, trägt an seinem Einführungsende einen Dorn, welcher - wie das gesamte Innenrohr - Übermaß gegenüber dem Innendurchmesser des Isolationsmantels aufweist.

Der außenmantelseitig das flexible Außenrohr tragende Isolationsmantel wird nun über den Dorn hinweg auf das Innenrohr geschoben. Hierbei wird der hohlzylindrische Isolationsmantel von innen nach außen so verdichtet, daß die beiden Rohre hinreichend raumfest aneinander gehalten sind.

Voraussetzung für das durch die DE-G-33 27 353 bekannte Verfahren ist ein flexibles Außenrohr, welches sich relativ leicht an den axialen Krümmungsverlauf des Innenrohres anpassen soll.

In der DE-G-37 12 193 ist ein Verfahren beschrieben, gemäß welchem ein Innenrohr und ein Außenrohr zwischen sich einen Ringraum bilden, der mit Keramikpulver aufgefüllt wird, das als Isolationsmaterial dient. Hierbei ist das Außenrohr mit seinen beiden eingezogenen Enden mit dem Innenrohr gasdicht verbunden. Das Keramikpulver wird über eine nachträglich wieder zu schließende Öffnung in den Ringraum eingebracht. Anschließend kann das Doppelrohr gebogen werden.

Das von der DE-G-37 12 193 bekannte Verfahren wird als zu aufwendig empfunden. Außerdem wird die Keramikfüllung nicht verdichtet, was sich ggf. beim Biegevorgang als nachteilig erweisen könnte (z.B. bei versehentlich zu geringer Füllung).

Der DE-G-25 52 647 schließlich ist ein Verfahren zu entnehmen, gemäß welchem ein das Innenrohr mit allseitigem Abstand umgebendes Außenrohr aus zwei miteinander verschraubbaren Schalen besteht. Diese pressen die im Ringraum befindliche wärmeisolierende Schicht elastisch zusammen. Auch dieses bekannte Verfahren ist mit einem großen Herstellungsaufwand verbunden.

Ausgehend von dem eingangs geschilderten bekannten Verfahren (DE-G-33 27 353), liegt der Erfindung die Aufgabe zugrunde, ein Verfahren zu entwickeln, welches ein aufwendiges flexibles Außenrohr entbehrlich macht und die Herstellung eines mechanisch widerstandsfähigeren aber zugleich biegefähigen Doppelrohres gestattet.

Entsprechend der Erfindung wird diese Aufgabe dadurch gelöst, daß der Isolationsmantel auf dem Innenrohr, welches starr und geradlinig ist, angebracht wird, worauf das vom Isolationsmantel umgebende Innenrohr etwa mit Schiebesitzpassung in das starre, glatte, geradlinige Außenrohr hineingeschoben und sodann das Innenrohr unter plastischer Verformung aufgeweitet wird, wobei der Isolationsmantel zugleich zwischen der Außenmantelfläche des Innenrohres und der Innenmantelfläche des Außenrohres radial eingepreßt und verdichtet wird.

Bei Anwendung des erfindungsgemäßen Verfahrens wird der Isolationsmantel bei der Aufweitung des Innenrohres, was durch plastische Verformung geschieht, faltenfrei gegen die Innenmantelfläche des Außenrohres gepreßt und hierbei verdichtet. Der Verdichtungsgrad ist so groß, daß das erfindungsgemäß hergestellte Doppelrohr einen kleinsten Biegeradius gestattet, welcher dem 1,5-fachen des Doppelrohr-Außendurchmessers entspricht.

Bei einer solchen starken Biegung stellt sich zwar an der Hohlseite der Biegestrecke eine gewisse Materialverdichtung des Isolationsmantels ein, während dieser im konvexen Bereich der Biegestrecke eine gewisse Dehnung erfährt, die aber unwesentlich ist. Jedenfalls wird die Wärmeisolierung im Ringraum zwischen Innenrohr und Außenrohr auch bei einer solchen starken Biegung voll aufrechterhalten.

Das erfindungsgemäße Verfahren verwendet bevorzugt einen in der DE-A-36 40 653 beschriebenen Isolationsmantel, welcher zwischen zwei Aluminiumfolien einen etwa vliesartigen Formkörper aus Wärmedämmmaterial einschließt. Der Isolationsmantel wird derart auf dem Innenrohr befestigt, daß er dieses fest umringt. Der Isolationsmantel wird sodann bei Aufweitung des Innenrohres entlang seines Umfangs gedehnt und außerdem verdichtet, wodurch jegliche Faltenbildung des Isolationsmantels vermieden wird.

Im Gesamtzusammenhang ist es wichtig, daß das starre glatte Außenrohr ein Fertigrohr darstellt, welches während der eigentlichen Herstellung des Doppelrohres, insbesondere während der Verdichtung des Isolationsmantels, nicht verformt wird. In jedem Falle würde in diesem Zusammenhang eine Verformung des Außenrohres mittels Durchmesserreduzierung ausscheiden, weil sich hierdurch nur eine nachteilige Auffaltung des Isolationsmantels - nicht aber dessen erwünschte gleichmäßige tragende Verdichtung - ergeben würde.

Das erfindungsgemäße Verfahren gestattet sowohl eine Radialaufweitung des Innenrohres als auch dessen Axialaufweitung.

Bei einer Axialaufweitung muß das Innenrohr eine gewisse axiale Überlänge, d.h. einen beidendigen Überstand aufweisen, wenn beide Rohre nach der Aufweitung des Innenrohres endbündig sein sollen. Bei der Axialaufweitung wird ein Dorn durch das Innenrohr hindurchgezogen, oder aber es werden zwei Dorne axial gegeneinander bewegt. Hierbei wird das für die Aufweitung des Innenrohres erforderliche Material aus der Rohrlänge bezogen. Die Wandstärke des Innenrohres bleibt im wesentlichen unverändert.

Bei der Radialaufweitung hingegen wird ein Segmentwerkzeug (Spreizdorn) in das Innenrohr hineingeschoben. Durch den Spreizdorn- Hohlraum wird sodann ein dornartiger Verdränger-Körper hindurchgezogen und auf diese Weise das Innenrohr unter Zwischenschaltung der Segmente aufgeweitet. Bei dieser plastischen Verformung wird die Wandstärke reduziert, und zwar, über den Umfang des Innenrohres betrachtet, im wesentlichen lediglich in den freien Umfangsabschnitten zwischen den Einzelsegmenten. Bei der Radialaufweitung erfolgt praktisch keine Verkürzung der axialen Innenrohrlänge.

Der wesentliche Vorteil des erfindungsgemäßen Verfahrens besteht darin, daß es die Verwendung zweier starrer metallener Rohre gestattet. Der Verdichtungsgrad des Isolationsmantels ist nach der erfindungsgemäßen Aufweitung des Innenrohres so groß, daß das Doppelrohr im Zuge seiner Weiterverarbeitung entsprechend allen in der Praxis vorkommenden Biegeradien gebogen werden kann. Wichtig ist, daß beim Biegen der isolierte Ringraum zwischen Innen- und Außenrohr im wesentlichen unverändert erhalten bleibt. Beim erfindungsgemäßen Verfahren wird zudem der Vorteil beibehalten, daß das Außenrohr vor der Herstellung des Doppelrohres bereits das gewünschte Fertigmaß aufweist.

Zweckmäßig wird das Innenrohr auf seiner gesamten Axiallänge aufgeweitet.

Der Isolationsmantel des erfindungsgemäßen Doppelrohres wird vorteilhaft aus einem zusammenhängenden rohrförmigen Körper mit einer Aluminiuminnenhülse und einer Aluminiumaußenhülse hergestellt, zwischen denen der insbesondere vliesartige Isolationswerkstoff eingeschlossen ist. Ein solcher hohlzylindrischer Isolationsmantel umgibt das Innenrohr verhältnismäßig eng.

Erfindungsgemäß ist es auch möglich, daß der Isolationsmantel bandagenartig hergestellt wird.

Bei gewissen Anwendungsfällen kann es zweckmäßig sein, daß der Isolationsmantel unter Freilassung von Axialbereichen aus das Innenrohr aufgebracht wird. Z.B. können Endbereiche des Innenrohres für den Fall keinen Isolationsmantel tragen, daß nach der Herstellung des Doppelrohres Flansche angeschweißt werden müssen. Auch kann es zweckmäßig sein, z.B. in einem mittleren Bereich eines Doppelrohres den Isolationsmantel wegzulassen, wenn dort das Rohr zum Einschweißen eines Abzweiges (insbesondere bei einem Sechszylinder-Motor mit Doppel-Auspuffkrümmer) ausgeklinkt werden soll.

Wesentlich ist ein Verfahrensschritt, wonach das Außenrohr und Innenrohr aufweisende Doppelrohr nach Aufweitung des Innenrohrs und der damit verbundenen Verdichtung des Isolationsmantels einer Wärmebehandlung unterzogen wird.

Diese Wärmebehandlung ist für den Fall vorteilhaft, daß das Innenrohr aus zu einem durch die Aufweitung zur Kaltverfestigung neigendem Werkstoff besteht. Eine unzulässige Kaltverfestigung würde nämlich mit nachfolgenden Konfektionierungsarbeiten verbundene Verformungsvorgänge zumindest erschweren. Andererseits wird durch die hiermit einhergehende Erwärmung des Isolationsmantels und dessen etwaiger Bindemittel sowie Klebebefestigungsstellen eine vollständige Entgasung des Bereichs zwischen Innen- und Außenrohr sichergestellt. Diese vorzeitige Entgasung des Isolationsmantels verhindert jedenfalls eine unbeabsichtigte spätere Entgasung - verbunden mit einem schädlichen unzulässig hohen Innendruck - bei Inbetriebnahme der fertigen Abgasanlage.

Zweckmäßig findet die Wärmebehandlung in einem üblichen Durchlaufofen unter Schutzgasatmosphäre statt. Die Behandlungstemperatur sollte für die vorerwähnten verwendeten Werkstoffe bei ca. 835°C liegen.

Im Hinblick auf eine vollständige Entgasung des Isolationsmantel sollte die Behandlungstemperatur etwa 15 Minuten beibehalten werden. Zur Erzielung eines gleichmäßigen Kornaufbaus des metallischen Werkstoffgefüges erfolgt die Abkühlung zeitverzögert allmählich.

In der Zeichnung ist ein bevorzugtes Ausführungsbeispiel entsprechend der Erfindung in Form eines axialen Längsschnittes durch ein Doppelrohr näher dargestellt. Die Zeichnung gibt zugleich wesentliche Verfahrensschritte wieder.

Das Doppelrohr ist insgesamt mit der Bezugsziffer 10 bezeichnet. Es weist ein Innenrohr 11 und ein Außenrohr 12 auf. Die beiden längsnahtgeschweißten Rohre 11, 12 bestehen aus geeignetem Stahl, beispielsweise aus X8Cr17.

Die Rohre 11, 12 sind konzentrisch zueinander angeordnet und bilden beim gezeigten Ausführungsbeispiel einen größer bemessenen Ringraum $R_1$ und

zwei kleiner bemessene Ringräume $R_2$. Der größere Ringraum mit einer Spaltweite von etwa 5,13 mm nimmt den noch unverdichteten Isolationsmantel 13 auf, während die beiden kleiner bemessenen Ringräume $R_2$ mit einer Spaltweite von 3 mm der Aufnahme des bereits verdichteten Isoliermantels 13 dienen.

Anhand der Zeichnung sind die wesentlichen Verfahrensschritte herleitbar, die zur Herstellung des Doppelrohres 10 führen:

Das Außenrohr 12 besitzt einen Außendurchmesser $B_a$ = 60 mm und einen Innendurchmesser $B_i$ = 57,6 mm.

Das unverformte Innenrohr 11 weist einen Außendurchmesser $A_{1a}$ = 47,35 mm und einen Innendurchmesser $A_{1i}$ = 44,95 mm auf. Der Dämmstoff- bzw. Isolationsmantel 13 weist in diesem Bereich eine Schichtdicke von 5 mm auf, während die Spaltweite des Ringraums $R_1$ 5,13 mm beträgt.

Das geweitete Innenrohr weist einen Innendurchmesser $A_{2i}$ = 49,2 mm und einen Außendurchmesser $A_{2a}$ = 51,6 mm auf. Hieraus ergibt sich eine Spaltweite in den Ringräumen $R_2$ von 3 mm, was bedeutet, daß durch die Aufweitung des Innenrohres 11 der Isolationsmantel 13 zu einer Schichtdicke von 3 mm verdichtet wurde. Die Wandstärke $s_a$ des Innenrohres 11 und die Wandstärke $s_b$ des Außenrohres 12 betragen in jedem Falle 1,2 mm.

Zu Beginn des Verfahrens wird zunächst der Isolationsmantel 13 auf die Außenmantelfläche 14 des Innenrohres 11 aufgebracht, derart, daß der Isolationsmantel 13 das Innenrohr 11 eng und fest umschließt.

Das den Isolationsmantel 13 tragende Innenrohr 11 wird sodann etwa mit Schiebesitzpassung (0,065 mm allseitiges Spiel stehen etwa zur Verfügung) in das Außenrohr 12 eingeschoben. Sodann werden zwei Aufweitdorne 15, 16, die jeweils einen Dornkörper 17 und eine Betätigungsstange 18 aufweisen, mit gegenläufigen Bewegungsrichtungen v und u in den Innenraum des Innenrohres 11 hineingepreßt. Hierbei wird das Innenrohr 11 plastisch verformt, d.h. aufgeweitet. Zugleich wird durch diese Aufweitung der Isolationsmantel 13 von einer Schichtdicke von 5 mm auf eine Schichtdicke von 3 mm verdichtet.

Nachdem die beiden Dorne 15, 16 bei Fortschreiten ihrer gegenläufigen Bewegungen v und u gegeneinandergestoßen sind (in der Zeichnung nicht dargestellt), wird ein Dorn (z.B. der Dorn 16), in Richtung v zurückbewegt, während der andere Dorn 15 seine anfängliche Bewegungsrichtung v bis zur vollendeten Aufweit-Verformung des gesamten axial mittleren Bereichs des Innenrohres 11 fortsetzt.

Der Isolationsmantel 13 selbst ist im vorliegenden Falle hohlzylindrisch ausgebildet und besteht aus einer Innenhülse und einer Außenhülse aus Aluminium-Folie. Zwischen Innen- und Außenhülse nach außen hin abgeschlossen, befindet sich ein Mineralstoffvlies. Im Zusammenhang mit den vorstehenden Erläuterungen wird deutlich, daß der gesamte zusammenhängende hohlzylindrische Isolationsmantel 13 während der Aufweitung des Innenrohres 11 eine Dehnung erfährt und hierbei zwischen der Außenmantelfläche 14 des Innenrohres 11 und der Innenmantelfläche 19 des Außenrohres 12 faltenfrei bzw. glatt zusammengepreßt wird.

Das so fertiggestellte Doppelrohr 10 kann sodann mit einem kleinsten Krümmungsradius von 1,5 x $B_a$ gebogen werden, wobei der verdichtete Isolationsmantel 13 beide Rohre 11, 12 im Bereich der Biegung zuverlässig voneinander distanziert.

Bei der vorbeschriebenen Aufweitung handelt es sich um eine Axialaufweitung. Selbstverständlich ist für besondere Anwendungsfälle auch eine Radialaufweitung mit einem an sich bekannten Spreizdorn möglich. Die Axialaufweitung gestattet indes die Verarbeitung größerer Rohrlängen.

Selbstverständlich ist das Doppelrohr 10 nicht auf die vorbezeichneten Abmessungen beschränkt; vielmehr können alle praktikablen Abmessungen und geeigneter Rohr- sowie Isolationswerkstoffe zur Verwendung gelangen.

## Patentansprüche

1. Verfahren zur Herstellung eines Doppelrohres mit einem in einem Ringraum zwischen einem metallenen Innenrohr und einem bereits seine endgültigen Durchmesser aufweisenden metallenen fertigen Außenrohr angeordneten zusammenhängenden Isolationsmantel aus temperaturbeständigem Werkstoff, bei welchem der Isolationsmantel in das Außenrohr eingebracht und nachfolgend von innen nach außen verdichtet und das eingeschobene Innenrohr während des Verdichtens in seine endgültige Relativlage bezüglich des Außenrohres hineinversetzt wird, dadurch gekennzeichnet, daß der Isolationsmantel (13) auf dem Innenrohr (11), welches starr und geradlinig ist, angebracht wird, worauf das vom Isolationsmantel (13) umgebene Innenrohr (11) etwa mit Schiebesitzpassung in das starre, glatte, geradlinige Außenrohr (12) hineingeschoben und sodann das Innenrohr (11) unter plastischer Verformung aufgeweitet wird, wobei der Isolationsmantel (13) zugleich zwischen der Außenmantelfläche (14) des Innenrohres (11) und der Innenmantelfläche (19) des Außenrohres (12) radial eingepreßt und verdichtet wird.

2. Verfahren nach Anspruch 1, dadurch gekennzeichnet, daß der Isolationsmantel (13), das Innenrohr (11) fest umringend (bei 14), auf letzterem angebracht wird.

3. Verfahren nach Anspruch 1 oder nach Anspruch 6, dadurch gekennzeichnet, daß der Isolationsmantel (13) bei Aufweitung des Innenrohres (11) zugleich entlang seines Umfangs gedehnt wird.

4. Verfahren nach einem der vorangehenden Ansprüche, dadurch gekennzeichnet, daß das Außenrohr (12) sowie das den Isolationsmantel (13) tragende Innenrohr (11) raumfest gehalten werden und mindestens ein, Übermaß gegenüber dem Innenquerschnitt des Innenrohres (11) aufweisendes, etwa dornartiges Aufweitwerkzeug (15, 16) axial durch das Innenrohr (11) hindurchbewegt wird.

5. Verfahren nach Anspruch 4, dadurch gekennzeichnet, daß zwei Aufweitwerkzeuge (15, 16) gegenläufig zueinander (bei v und u) in das Innenrohr (11) hineingeschoben werden.

6. Verfahren nach Anspruch 5, dadurch gekennzeichnet, daß nach Gegeneinanderstoßen der beiden gegenläufig bewegten (bei v und u) Aufweitwerkzeuge (15, 16) das eine Aufweitwerkzeug (z.B. 16) zurückbewegt wird, während das andere Aufweitwerkzeug (z.B. 15) seine anfängliche Bewegungsrichtung (v) bis zur endgültigen Verformung des gesamten axial mittleren Innenrohrbereiches fortsetzt.

7. Verfahren nach einem der Ansprüche 1 bis 3, dadurch gekennzeichnet, daß ein aus mehreren umfangsverteilten Segmenten bestehender Spreizdorn in das Innenrohr (11) eingeführt wird und sodann durch den von den Segmenten um-schlossenen Dorninnenraum ein Verdrängerkör-per unter Aufweitung des Innenrohres (11) - und zwar mittelbar über die Spreizsegmente - axial hindurchbewegt wird.

8. Verfahren nach einem der Ansprüche 1 bis 7, dadurch gekennzeichnet, daß das Innenrohr (11) auf seiner gesamten Axiallänge aufgeweitet ist.

9. Verfahren nach einem der Ansprüche 1 bis 8, dadurch gekennzeichnet, daß der Isolationsmantel (13) rohrförmig vorgeformt wird.

10. Verfahren nach einem der Ansprüche 1 bis 9, dadurch gekennzeichnet, daß der Isolationsmantel unter Freilassung von Axialbereichen auf das Innenrohr (11) aufgebracht wird.

11. Verfahren nach einem der Ansprüche 1 - 10, dadurch gekennzeichnet, daß das Außenrohr (12) und Innenrohr (11) aufweisende Doppelrohr (11, 12, 13) nach Aufweitung des Innenrohrs (11) und der damit verbundenen Verdichtung des Isolationsmantels (13) einer Wärmebehandlung unterzogen wird.

12. Verfahren nach Anspruch 11, dadurch gekennzeichnet, daß die Wärmebehandlung unter Schutzgasatmosphäre, wie z.B. Stickstoff od. dgl., erfolgt.

13. Verfahren nach Anspruch 11 oder 12, dadurch gekennzeichnet, daß zwischen einer Aufheizphase und einer Abkühlphase das Doppelrohr (11, 12, 13) eine Zeit lang bei gleichbleibender Wärme unter Schutzgasatmosphäre gehalten wird.

## Claims

1. Process for manufacturing a double pipe with a continuous insulation jacket of temperature-resistant material mounted in an annular gap between a metal inner pipe and a metal, finished outer pipe already having its final diameter, wherein the insulation jacket is inserted into the outer pipe and is then compressed from the inside outwards, and the inserted inner pipe is displaced into its final position relative to the outer pipe during compression, characterised in that the insulation jacket (13) is mounted on the inner pipe (11), which is rigid and rectilinear, whereupon the inner pipe (11) surrounded by the insulation jacket (13) is inserted into the rigid, smooth, rectilinear outer pipe (12), for example with a slide fit, and then the inner pipe (11) is expanded with plastic deformation, in which case the insulation jacket (13) is simultaneously radially squeezed in and compressed between the outer surface (14) of the inner pipe (11) and the inner surface (19) of the outer pipe (12).

2. Process according to claim 1, characterised in that the insulation jacket (13) firmly enclosing (at 14) the inner pipe (11) is mounted on the latter.

3. Process according to claim 1 or claim 6, characterised in that the insulation jacket (13) is simultaneously stretched along its circumference during expansion of the inner pipe (11).

4. Process according to one of the preceding claims, characterised in that the outer pipe (12) and the inner pipe (11) carrying the insulation jacket (13) are held fixed in space, and at least one, for example rod-like, expansion tool (15, 16) which is oversized relative to the inner cross-section of the inner pipe (11) is moved axially through the inner pipe (11).

5. Process according to claim 4, characterised in that two expansion tools (15, 16) are inserted into the inner pipe (11) in opposite directions from one another (at v and u).

6. Process according to claim 5, characterised in that after the two expansion tools (15, 16) moving in opposite directions (at v and u) have met, one expansion tool (e.g. 16) is moved back, whilst the other expansion tool (e.g. 15) continues in its initial direction of motion (v) until final deformation of the whole axial central inner pipe region has taken place.

7. Process according to one of claims 1 to 3, characterised in that an expansion rod consisting of a plurality of circumferentially distributed segments is inserted into the inner pipe (11) and then a displacement body enclosed by the segments is moved axially through the rod interior, thus expanding the inner pipe (11), in particular indirectly via the expansion segments.

8. Process according to one of claims 1 to 7, characterised in that the inner pipe (11) is expanded over its whole axial length.

9. Process according to one of claims 1 to 8, characterised in that the insulation jacket (13) is preformed as a tube.

10. Process according to one of claims 1 to 9, characterised in that the insulation jacket is applied to the inner pipe (11) leaving some axial regions free.

11. Process according to one of claims 1 to 10, characterised in that the double pipe (11, 12, 13) comprising the outer pipe (12) and inner pipe (11) is subjected to heat treatment after expansion of the inner pipe (11) and compression of the insulation jacket (13) connected thereto.

12. Process according to claim 11, characterised in that the heat treatment is carried out in a protective gas atmosphere, such as nitrogen or the like, for example.

13. Process according to either of claims 11 or 12, characterised in that the double pipe (11, 12, 13) is kept for a time at a constant temperature in a protective gas atmosphere between a heating phase and a cooling phase.

## Revendications

1. Procédé de fabrication d'un tube double comprenant une gaine isolante en matière résistante à la température, cohérente, disposée dans un espace annulaire compris entre un tube intérieur métallique et un tube extérieur métallique qui présente déjà son diamètre définitif, dans lequel la gaine isolante est introduite dans le tube extérieur et ensuite comprimée de l'intérieur vers l'extérieur et le tube intérieur emmanché est amené porté à sa position relative définitive par rapport au tube extérieur pendant la compression, caractérisé en ce que

que la gaine isolante (13) est disposée sur le tube intérieur (11), qui est rigide et rectiligne, après quoi le tube intérieur (11) entouré de la gaine isolante (13) est emmanché sensiblement à ajustement glissant, dans le tube extérieur (12), rigide, lisse, rectiligne et, ensuite, le tube intérieur (11) est élargi avec déformation plastique, la gaine isolante (13) étant alors simultanément serré radialement et comprimée entre la surface latérale extérieure (14) du tube intérieur (11) et la surface latérale intérieure (19) du tube extérieur (12).

2. Procédé selon la revendication 1, caractérisé en ce que la gaine isolante (13) est montée sur le tube intérieur (11) dans un état dans lequel elle entoure rigidement ce tube (en 14).

3. Procédé selon la revendication 1 ou la revendication 6, caractérisé en ce que, lors de l'élargissement du tube intérieur (11), la gaine isolante (13) est en même temps dilatée selon sa circonférence.

4. Procédé selon une des revendications précédentes, caractérisé en ce que le tube extérieur (12) ainsi que le tube intérieur (11) qui porte la gaine isolante (13) sont maintenus dans des positions fixes et on fait passer axialement à travers le tube intérieur (11) au moins un outil élargisseur (15, 16) à peu près en forme de mandrin, qui présente un excédent de cote comparativement à la section transversale intérieure du tube intérieur (11).

5. Procédé selon la revendication 4, caractérisé en ce qu'on emmanche deux outils élargisseurs (15, 16) dans le tube intérieur (11), l'un en sens inverse de l'autre (en <u>v</u> et <u>u</u>).

6. Procédé selon la revendication 5, caractérisé en ce qu'après que les deux outils élargisseurs (15, 16) mis en mouvement l'un en sens inverse de l'autre (en <u>v</u> et <u>u</u>) se sont rencontrés, on fait reculer l'un des outils élargisseurs (par exemple 16) tandis que l'autre outil élargisseur (par exemple 15) poursuit son mouvement dans le sens initial (<u>v</u>) jusqu'à la déformation définitive de l'ensemble de la région axialement centrale du tube intérieur.

7. Procédé selon une des revendications 1 à 3, caractérisé en ce qu'on introduit dans le tube intérieur (11) un mandrin expansible composé de plusieurs segments répartis sur la circonférence et, ensuite, on fait passer axialement un corps écarteur à travers la cavité intérieure du mandrin entourée par les segments, en provoquant l'élargissement du tube intérieur (11) - plus précisément indirectement par l'intermédiaire des segments expansibles.

8. Procédé selon une des revendications 1 à 7, caractérisé en ce qu'on élargit le tube intérieur (11) sur toute sa longueur axiale.

9. Procédé selon une des revendications 1 à 8, caractérisé en ce que la gaine isolante (13) est préformée en forme de tube.

10. Procédé selon une des revendications 1 à 9, caractérisé en ce que la gaine isolante est montée sur le tube intérieur (11) en laissant subsister des régions axiales libres.

11. Procédé selon une des revendications 1 à 10, caractérisé en ce qu'après l'élargissement du tube intérieur (11) et la compression résultante de la gaine isolante (13), le tube double (11, 12, 13) qui présente le tube extérieur (12) et le tube intérieur (11) est soumis à un traitement thermique.

12. Procédé selon la revendication 11, caractérisé en ce que le traitement thermique s'effectue sous une atmosphère de gaz protecteur comme, par exemple, de l'azote ou équivalent.

13. Procédé selon la revendication 11 ou 12, caractérisé en ce que, entre une phase de chauffage une phase de refroidissement, le tube double (11, 12, 13) est maintenu pendant un certain temps à une température constante sous une atmosphère de gaz protecteur.

EP 0 431 649 B1

13  R2  13  10  R1  14  R2  12  13

βb

Ba

8

A2a

A1a

Bi

A2i  18  17  A1i  17  18

v  u

βa

15  19  16  11